(19) Europäisches Patentamt / European Patent Office / Office européen des brevets

(11) **EP 4 059 685 B1**

(12) **EUROPEAN PATENT SPECIFICATION**

(45) Date of publication and mention of the grant of the patent:
**25.06.2025 Bulletin 2025/26**

(21) Application number: **20886404.1**

(22) Date of filing: **05.11.2020**

(51) International Patent Classification (IPC):
*B29B 11/16* (2006.01)   *B29K 105/08* (2006.01)
*B29K 105/10* (2006.01)   *B32B 5/26* (2006.01)
*B32B 5/28* (2006.01)   *D06M 17/00* (2006.01)
*B29C 43/12* (2006.01)   *B29C 70/16* (2006.01)
*B29C 70/44* (2006.01)

(52) Cooperative Patent Classification (CPC):
**B29C 70/16; B32B 1/08; B32B 3/16; B32B 5/022;**
**B32B 5/026; B32B 5/26; B32B 5/265; B32B 7/05;**
**B32B 7/12;** B29C 70/44; B32B 2250/20;
B32B 2307/718; B32B 2405/00

(86) International application number:
**PCT/JP2020/041312**

(87) International publication number:
**WO 2021/095623 (20.05.2021 Gazette 2021/20)**

(54) **CARBON FIBER TAPE MATERIAL, AND REINFORCED FIBER LAMINATE AND MOLDED ARTICLE USING SAME**

KOHLENSTOFFFASERBANDMATERIAL, VERSTÄRKTES FASERLAMINAT UND DARAUS HERGESTELLTER FORMKÖRPER

MATÉRIAU DE BANDE DE FIBRES DE CARBONE, ET STRATIFIÉ RENFORCÉ PAR DES FIBRES ET ARTICLE MOULÉ L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2019 JP 2019203907**
**11.11.2019 JP 2019203908**

(43) Date of publication of application:
**21.09.2022 Bulletin 2022/38**

(73) Proprietor: **Toray Industries, Inc.**
**Tokyo 103-8666 (JP)**

(72) Inventor: **SATO, Masayuki**
**Nagoya-shi, Aichi 455-8502 (JP)**

(74) Representative: **Hoefer & Partner Patentanwälte mbB**
**Pilgersheimer Straße 20**
**81543 München (DE)**

(56) References cited:
EP-A1- 1 125 728   EP-A1- 2 447 401
EP-A1- 3 023 241   EP-A1- 3 112 111
WO-A1-2012/011437   WO-A1-2018/052080
WO-A1-99/04967   JP-A- 2010 155 460
JP-A- 2015 017 343   JP-A- 2015 502 271
JP-A- 2018 501 121   JP-A- H07 149 927

**Description**

TECHNICAL FIELD

The present invention relates to a reinforcing fiber tape material, and a reinforcing fiber laminate and molded body produced by placing and laminating the reinforcing fiber tape material.

BACKGROUND ART

Fiber reinforced plastic (FRP) including a reinforcing fiber and a resin is used for aviation, space, automobiles, and the like because FRP has the properties such as the light weight and the high strength. Examples of the method of molding that achieves both the high productivity and the high strength of FRP include a method of resin transfer molding (RTM) and a method of vacuum-assisted resin transfer molding (VaRTM) in which a resin is later impregnated into a reinforcing fiber laminate and cured. The method of RTM is a method of molding FRP by later impregnating and curing a matrix resin, in which a reinforcing fiber laminate including a reinforcing fiber substrate including a dry reinforcing fiber bundle group that is not preimpregnated with a matrix resin is placed in a mold, and a liquid matrix resin having a low viscosity is injected. When a particularly high productivity is required, for example, a technique of shortening the time for molding fiber reinforced plastic is used in which during the injection of a resin, the size of a cavity in a mold is set larger than the thickness of a final molded product, and by closing the mold, a reinforced fiber laminate is impregnated at a high speed. In recent years, a method of wet press molding has also been used in which a liquid resin is applied to a reinforcing fiber laminate, and then a mold is clamped to impregnate the resin into the reinforced fiber laminate.

A reinforcing fiber laminate being impregnated with and cured of a resin is traditionally formed by cutting out a desired shape from a reinforcing fiber substrate such as a textile or a non crimp fabric (NCF) that includes a dry reinforcing fiber bundle group impregnated with no resin and has a fabric form having a certain width (that is, a substantially rectangular shape), and draping and sticking the cut-out product into a three-dimensional shape. However, after the desired shape is cut out from the fabric having a certain width, a large amount of remaining end material is generated. More specifically, the quantity of the reinforcing fibers discarded is large, and thus in the conventional method in which a reinforcing fiber substrate that has a fabric form having a certain width is manufactured in advance, there is a problem that the manufacturing cost is high.

For solving such a problem, a method of fiber placement has been attracting attention. In the method, a reinforced fiber bundle is placed only at a necessary portion so as to obtain a desired shape that matches a product shape. In accordance with the method of fiber placement, a required quantity of reinforcing fibers are placed at a necessary portion, and thus, the quantity of the reinforcing fibers discarded can be significantly reduced by making the reinforcing fibers into a tape-like form and placing the tape material only at required sites. Furthermore, the reinforcing fiber substrate manufactured by the method of fiber placement has less crimps in the reinforced fiber bundle and better straightness than conventional textiles and NCFs, so that the FRP obtained by injecting and curing a resin in the substrate has a high mechanical strength.

As a conventional technique that relates to a carbon fiber tape material for use in the method of fiber placement, for example, Patent Document 1 proposes a carbon fiber tape material with a polymer adhesive bonded to both surfaces thereof, and a method for producing the material. Thus method allows a carbon fiber tape with a desired width to be produced with high accuracy by melting the polymer adhesive and then attaching the melted polymer adhesive to a reinforcing fiber bundle group.

In addition, Patent Document 2 proposes a carbon fiber tape material with a non-woven veil bonded to at least one surface thereof, a preform, and a method for producing the preform. This method achieves, with the use of the carbon fiber tape material with the non-woven veil bonded thereto, the effect of increasing the resin permeability in the in-plane direction at the time of resin injection in RTM molding or VaRTM molding. In addition, in the case where a thermoplastic fiber material is used for the non-woven veil, the resulting composite material can be toughened.

Furthermore, Patent Document 3 proposes a reinforcing sheet material including a reinforcing fiber material with a basis weight of 80 g/m$^2$ or less and a knitted fabric of a thermoplastic resin material. According to such a configuration, the use of the knitted fabric with flexibility achieves a sheet material that maintains straightness in a thin and wide form without deformations such as curls. In addition, the thin knitted fabric with many voids is used, thus allowing the air inside to be released, and allowing a molded body with few voids (voids) to be obtained.

Patent Document 4 teaches a textile semi-finished product, which comprises a textile structure and a fixing structure, where the textile structure has a first large number of reinforcing fiber bundles of high-performance fibers, where displacement areas are formed between adjacent reinforcing fiber bundles that are against each other, where the fixing structure fixes the reinforcing fiber bundles depending on the textile structure with a fixing pattern in such a manner that the reinforcing fiber bundles are fixed at least partially and the displacement areas remain at least partially free. Independent claims are also included for: (1) an apparatus for producing the textile semi-finished product for producing a fiber composite component, comprising a device for supplying the above mention textile semi-finished product and a device for applying the fixing pattern for fixing the reinforcing fiber bundle; and (2) a method for producing a textile semi-finished product comprising (a) assembling the textile structure of the first large number of reinforcing fiber bundles of high-performance fibers, where displacement areas are formed between adjacent reinforcing fiber bundles and are mutually displaceable, (b) arranging the fixing structure on the textile structure, and (c) fixing the reinforcing fiber bundle with the fixing structure by applying the fixing pattern relative to the textile structure.

PRIOR ART DOCUMENTS

PATENT DOCUMENTS

Patent Document 1: Japanese Patent Laid-open Publication No. 2012-510385

Patent Document 2: Japanese Patent Laid-open Publication No. 2017-521291

Patent Document 3: Japanese Patent Laid-open Publication No. 2015-116806

Patent Document 4: EP 2 447 401 A1

SUMMARY OF THE INVENTION

PROBLEMS TO BE SOLVED BY THE INVENTION

In the method of fiber placement, however, a carbon fiber tape needs to follow the shape of a mold in attaching the carbon fiber tape directly to the mold. Thus, the carbon fiber tape is required to have higher deformability as the width of the carbon fiber tape is increases and as the mold shape is more complicated. In addition, having high productivity is required in laminating the carbon fiber tape and in resin injection in RTM molding and VaRTM molding.

In this regard, the deformability of the polymer adhesive is not mentioned in the invention in Patent Document 1. In the case where, for example, a non-woven veil is used as the polymer adhesive, then the non-woven veil typically has insufficient deformability in the planar direction, because the non-woven veil is formed by randomly orienting short fibers. Furthermore, when the polymer adhesive is melted, the form of the non-woven veil is lost, and the original deformability of the fabric material will be thus deteriorated.

According to the invention in Patent Document 2, the carbon fiber tape material with the non-woven veil bonded to at least one surface thereof is used. Thus, the non-woven veil has insufficient deformability, because the non-woven veil is formed by randomly orienting short fibers as in Reference 1.

According to the invention in Patent Document 3, the fabric with deformability is used. Since reinforcing fiber materials have low basis weight, it is necessary to laminate a large number of sheet materials in order to obtain a desired product thickness, thereby leading to complicated work and decreasing the productivity. In addition, the invention described in Patent Document 3 relates to a reinforcing sheet material, and fails to suggest the application of the reinforcing sheet material to the method of fiber placement.

The present invention is intended to solve the problems of the prior art, and specifically, provide a carbon fiber tape material that is favorable in followability to molds and impregnation with matrix resins, and capable of enhancing the productivity in the case of producing a reinforcing fiber laminate by a method of fiber placement and capable of providing a molded body with high mechanical strength when the material is impregnated with a resin and molded. In addition, the invention is intended to provide a reinforcing fiber laminate and molded body that are obtained from the carbon fiber tape material.

SOLUTIONS TO THE PROBLEMS

The present invention has been made to solve at least a part of the problems described above, and is defined in the appended claims.

EFFECTS OF THE INVENTION

The carbon fiber tape material according to the present invention is favorable in followability to molds and impregnation with resins, and capable of enhancing the productivity in the case of producing a reinforcing fiber laminate by a method of fiber placement and capable of providing a molded body with high mechanical strength when the material is impregnated with a resin and molded.

BRIEF DESCRIPTION OF THE DRAWINGS

Fig. 1 is a schematic view of a carbon fiber tape material not in accordance with the present invention.

Fig. 2 is a schematic view of another carbon fiber tape material not in accordance with the present invention.

Fig. 3 is a schematic view of another carbon fiber tape material not in accordance with the present invention.

Fig. 4 is a schematic view of another carbon fiber tape material, wherein the carbon fiber tape material of Fig. 4a is not in accordance with the present invention and the carbon fiber tape material of Fig. 4b is in accordance with the present invention.

Fig. 5 is a schematic view of another carbon fiber tape material not in accordance with the present invention.

Fig. 6 is a schematic view of another carbon fiber tape material not in accordance with the present invention.

Fig. 7 is a schematic view of another carbon fiber tape material not in accordance with the present invention.

Fig. 8 is a schematic view illustrating a method for measuring a fabric elongation rate.

Fig. 9 is a schematic view illustrating a method for performing a picture frame method by a two sides gripping method.

Fig. 10 is a graph showing the relationship of shear angle-tensile load in the case of performing the picture frame method by the two sides gripping method.

Fig. 11 is a schematic view of another carbon fiber tape material, wherein the carbon fiber tape material of Fig. 11a is in accordance with the present invention and the carbon fiber tape material of Fig. 11b is not in accordance with the present invention.

EMBODIMENTS OF THE INVENTION

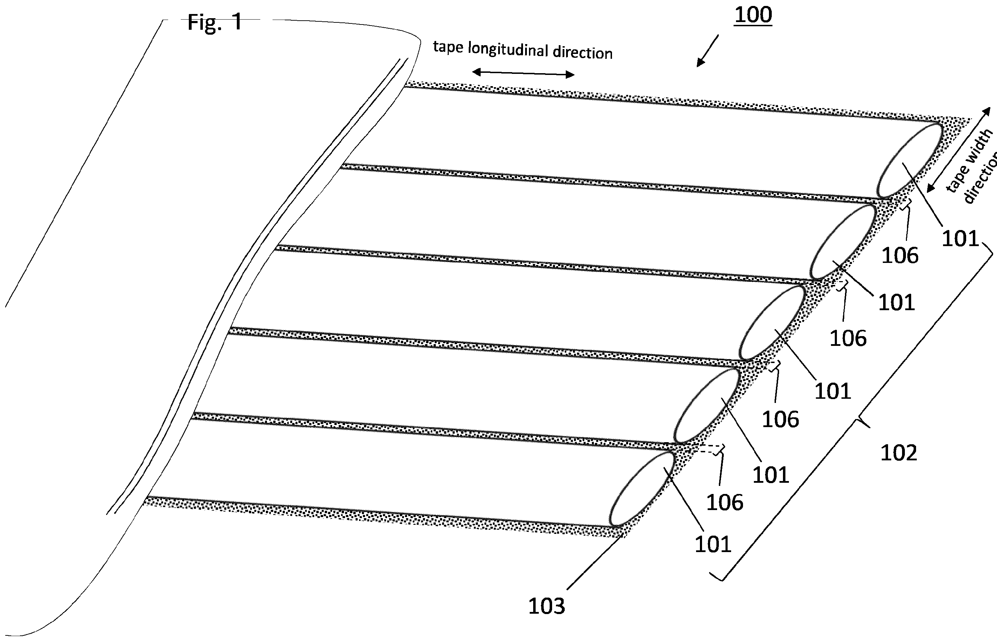

Fig. 1 shows a schematic view of a carbon fiber tape material not in accordance with the present invention.
The carbon fiber tape material 100 shown in Fig. 1 has a plurality of carbon fiber bundles 101 integrated with each other by a fabric 103, and the respective carbon fiber bundles are arranged parallel to (in parallel with) each other in a width direction to form a carbon fiber bundle group 102.
As the carbon fiber bundle for use in the present invention, for example, a carbon fiber bundle subjected to sizing treatment in advance can also be used. The sizing treatment is performed, thereby allowing the convergency of the carbon fiber bundle to be improved, and allowing the generation of fuzz to be suppressed. In addition, the carbon fiber bundle for use in the present invention may have an organic fiber mixed with a carbon fiber.
The number of filaments N (unit: K = 1,000) in the carbon fiber bundle is, in a preferred aspect, 1 K (1,000) or more and 60 K (60,000) or less. When the number of single fibers in the carbon fiber bundle 101 is less than 1 K, the yarn width of the carbon fiber bundle 101 is narrow, and defects such as twisting are likely to occur. When the number of the single fibers in the carbon fiber bundle 101 is more than 60 K, the carbon fiber basis weight of the carbon fiber bundle 101 is high, and when the carbon fiber bundles 101 are aligned by the method of fiber placement to obtain a substrate, the carbon fiber basis weight per layer is excessively high, and there is thus a possibility that the allowable range of the design of the fiber orientation will be narrowed.
The carbon fiber tape material 100 includes a plurality of carbon fiber bundles 101 mutually integrated with the fabric 103, thereby allowing the number and weight of carbon fiber filaments per unit length of the carbon fiber tape material to be increased. In addition, in placing and laminating the carbon fiber tape material by the method of fiber placement to produce a fiber-reinforced plastic, the time of placing and laminating the carbon fiber tape material, required to achieve a desired fiber volume content, can be shortened to improve the productivity.
The fabric 103 is made of one or more thermoplastic resins. The thermoplastic resin refers to a thermoplastic resin such as a polyamide resin, a polyester resin, a polyethylene terephthalate resin, a polyvinyl formal resin, a polyether sulfone resin, a phenoxy resin, or a polycarbonate resin, furthermore, a thermoplastic elastomer (a polystyrene-based resin, a polyolefin-based resin, a polyurethane-based resin, a polyester-based resin, a polyamide-based resin, a polybutadiene-based resin, a polyisoprene-based resin, a fluorine-based resin, an acrylonitrile-based thermoplastic elastomer, or the like), a copolymer or a modified product thereof, a resin produced by blending two or more of these resins, or the like. These resins can be formed into a fiber to have the form of a woven fabric (textile, knitted fabric) or a non-woven fabric, or can be formed into a film as the fabric 103. This fabric 103 is partially melted to be integrated with the carbon fiber bundle group 102.

In the present invention, it is important for the fabric 103 to have deformability. More specifically, it is important for the fabric elongation rate with a load of 80 mN/50 mm applied to the fabric in at least one direction of the fabric to be 5% to 100%, and further preferably 15% to 100%. The use of a deformable fabric allows the deformability of the tape to be improved, and allows the carbon fiber tape to follow the shape of a mold in the case of directly attaching the tape to the mold by the method of fiber placement. When the fabric elongation rate is less than 5%, the fabric has insufficient deformability and the carbon fiber tape fails to follow the mold shape. When the fabric elongation rate is more than 100%, the fabric is deformed by a slight external force, thereby making it difficult to accurately attach and integrate the fabric to and with the carbon fiber. The fabric elongation rate herein is determined from the following formula in accordance with JIS L 1096 8.16.1.

$$E_p = \{(L_1 - L_0)/L_0\} \times 100$$

$E_p$: fabric elongation rate (%)

$L_0$: original fabric length between marks (mm)

$L_1$: fabric length at load application (mm)

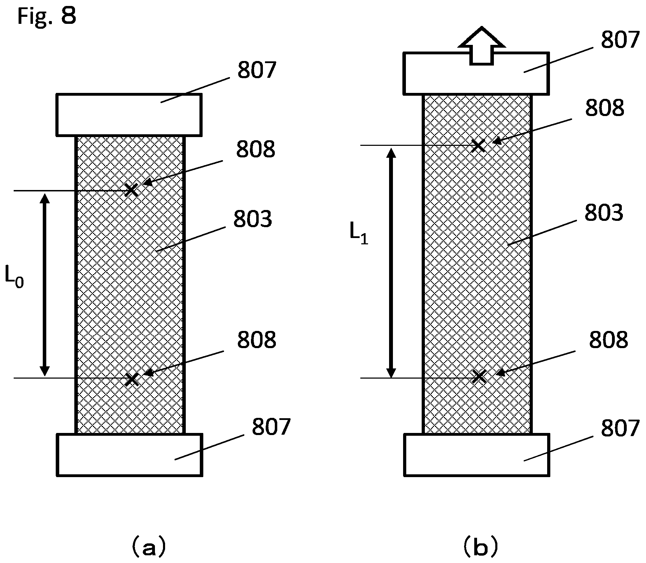

Fig. 8 shows a method for measuring the fabric elongation rate. FIG. 8(a) shows the condition of the fabric 803 before applying a certain load. The fabric is cut into a specified size, specified marks 808 are put on the fabric, an inter-mark distance $L_0$ is measured, and then the fabric is chucked by a clamp 807 as shown in FIG. 8(a). Thereafter, a load is applied. FIG. 8(b) shows the condition of the fabric 803 after applying the certain load. As shown in Fig. 8(b), the inter-mark distance $L_1$ after the application of the certain load is measured, thereby allowing the elongation rate to be calculated from the designated formula. It is to be noted that in the case of measuring the elongation rate of the fabric from the tape material that has the carbon fiber bundle and fabric integrated, the fabric is peeled off from the tape material, and the elongation rate is then measured in accordance with the above-mentioned procedure.

It is important for the carbon fiber tape material according to the present invention to have a basis weight excluding fabric between 120 g/m$^2$ and 400 g/m$^2$. When the basis weight of the carbon fiber tape material excluding the fabric is less than 120 g/m$^2$, the number of sheets of the carbon fiber tape material laminated for obtaining a laminate with a desired basis weight is increased in placing the carbon fiber tape material by the method of fiber placement, thereby increasing the time required for the lamination, which results in a limitation in further improvement in productivity. In contrast, when the basis weight of the carbon fiber tape material excluding the fabric is more than 400 g/m$^2$, the number of sheets of the carbon fiber tape material laminated for obtaining a laminate with a desired basis weight is excessively small, and there is a possibility that the degree of freedom in designing the fiber orientation may be reduced. The basis weight is preferably 160 g/m$^2$ to 300 g/m$^2$.

In addition, the fabric 103 desirably has regularity. In the present invention, the wording of "having regularity" means that a certain structural form is continuously repeated in the longitudinal direction of the fabric (i.e., the longitudinal direction of the carbon fiber tape material). Examples of the fabric with regularity include knitted fabrics and textiles. The knitted fabrics and the textiles have structural forms continuously repeated in the longitudinal direction, and the positions where the fibers are located is determined by the structure, and thus, the knitted fabrics and the textiles can be considered as materials that are less likely to vary or deviate in fiber basis weight as a fabric. In contrast, examples of fabrics without regularity include non-woven fabrics (non-woven veil). Examples of the features of the non-woven fabric include: having a configuration obtained by randomly dispersing short fibers and then bonding the fibers to each other, and thus having difficulty in showing the above-mentioned fabric elongation rate; and having no structural form continuously repeated in the longitudinal direction, and thus easily varying or deviating in fiber orientation and basis weight.

As the structure form of the fabric with regularity, a woven structure such as plain weave, twill weave, and satin weave, a warp knit structure or a weft knit structure such as denbigh, code, atlas, chain, inlay, satin, half, and tulle, or a combination thereof can be used.

These fabrics with regularity have forms kept by interknitting or interweaving fibers with each other. More specifically, as compared with a non-woven fabric that has fibers bonded to each other and fixed in relative position, the positions of the interknitted or interwoven fibers are not completely fixed with a high degree of freedom, thus resulting in excellent deformability in the case of a force applied in the plane (planar direction) of the fabric.

The basis weight of the fabric 103 is preferably more than 2 g/m$^2$ and 40 g/m$^2$ or less, further preferably more than 4 g/m$^2$ and 20 g/m$^2$ or less. When the basis weight of the fabric 103 is 2 g/m$^2$ or less, the material of the fabric is easily broken, thereby making desired deformability less likely to be obtained. In addition, the thickness of the fabric is reduced, thereby making it difficult to sufficiently secure the matrix resin flow path in impregnation. Furthermore, because of the thin fabric, the thickness of the interlayer reinforcing material in the molded body is reduced, thereby making it difficult to reinforce the interlayers between laminated fiber bundles. In contrast, when the basis weight of the fabric 103 is more than 40 g/m$^2$, because of the increased thickness of the fabric, the carbon fiber tape material undergoes an increase in thickness, thereby making the thickness of the reinforcing fiber laminate with the carbon fiber tape material used likely be larger than a desired product thickness, that is, making it difficult to make the reinforcing fiber laminate with the carbon fiber tape material used into the near net shape of a desired molded body. In addition, the interlayer reinforcement material of a molded body molded with the use of the reinforcing fiber laminate is likely to undergo an increase in thickness, thereby making it difficult to increase the fiber content (Vf: %) in the molded body.

The fabric 103 can be used not only for the purpose of improving the deformability of the tape, but also for the purpose of ensuring a flow path for a matrix resin in resin impregnation, and for the purpose of strengthening the interval between the layers by using a resin including a material exhibiting high toughness.

A gap 106 is preferably provided between the plurality of carbon fiber bundles 101 constituting the carbon fiber tape material 100. The presence of the gap 106 between the plurality of carbon fiber bundles 101 constituting the carbon fiber tape material 100 makes it easy to ensure a flow path for to matrix resin in the case of the material being used as a substrate by arrangement in one direction in the method of fiber placement. Also in the case of the material being used as a substrate by arranging a plurality of carbon fiber tape materials 100 in one direction without any gap in the method of fiber placement, the fluidity of a matrix resin in molding is more easily ensured when a gap provided between the plurality of carbon fiber bundles 101 fixed in one carbon fiber tape materials 100.

The gap 106 between the carbon fiber bundles is preferably 0.1 mm to 1 mm. When the gap 106 is smaller than 0.1 mm, the flow path of the matrix resin is reduced, thus increasing the time required for molding, and there is a possibility of leading to a decrease in productivity. When the gap 106 is larger than 1 mm, there is a possibility, in molding the reinforcing fiber laminate obtained by laminating the carbon fiber tape material in the method of fiber placement, that the tape in the upper layer partially may fall into the gap between the carbon fiber bundles in the lower layer, thereby decreasing the straightness of the carbon fiber bundles. As a result, the compression characteristics of the molded body obtained may be deteriorated.

The tape width of the carbon fiber tape material 100 is preferably 2 mm to 2000 mm, further preferably 5 mm to 100 mm. When the tape width of the carbon fiber tape material 100 is smaller than 2 mm, there is a need to place more carbon fiber tape materials in the fiber placement step, thereby making the productivity likely to be decreased. When the tape width of the carbon fiber tape material 100 is more than 2000 mm, a large-size apparatus for manufacturing the tape easily leads to an increase in tape cost, which is not preferred.

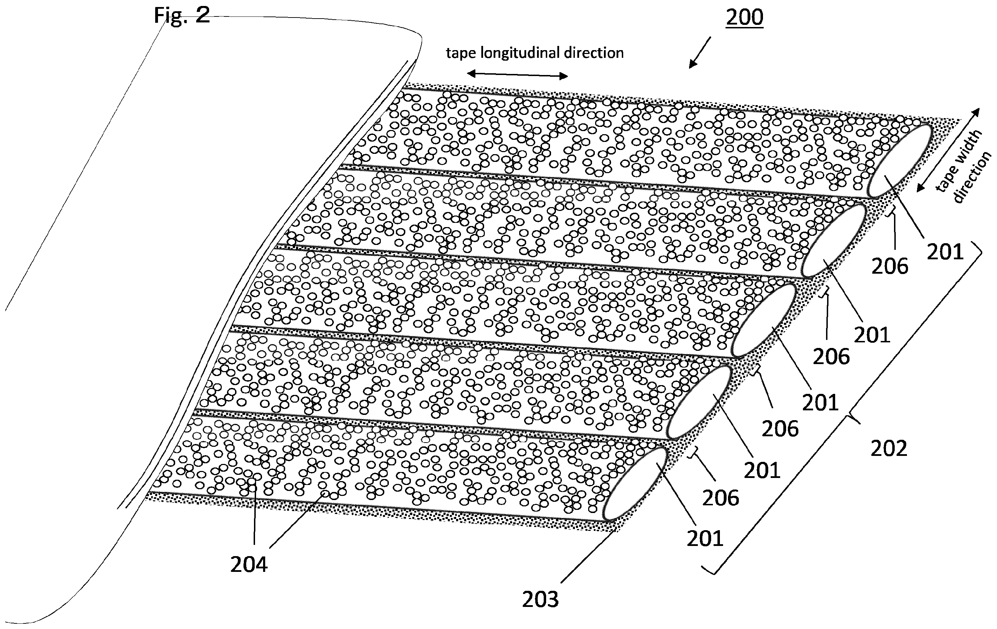

A carbon fiber tape material 200 shown in Fig. 2 is a schematic perspective view of another carbon fiber tape material not in accordance with the present invention. The carbon fiber tape material 200 has, as with the carbon fiber tape material shown in Fig. 1, a fabric 203 with regularity located on at least one surface of a carbon fiber bundle group 202, and the fabric 203 is integrated with the carbon fiber bundle group 202 with a resin binder 204 attached to at least one surface of the carbon fiber bundle group 202 for the purpose of keeping the form of each carbon fiber bundle 201. The other configuration is the same as the carbon fiber tape material 100 shown in Fig. 1.

The resin binder 204 may have the form of a particle or the form of a non-woven fabric. The resin binder 204 is not to be considered limited to these forms, and may be a film, a mesh, an emulsion, a coating, or an auxiliary yarn wound around the carbon fiber bundle.

As the material of the resin binder, a thermoplastic resin such as a polyamide resin, a polyester resin, a polyethylene terephthalate resin, a polyvinyl formal resin, a polyether sulfone resin, a phenoxy resin, or a polycarbonate resin, a phenol-based resin, a phenoxy resin, an epoxy resin, a polystyrene-based resin, a polyolefin-based resin, a polyurethane-based resin, a polyester-based resin, a polyamide-based resin, a polybutadiene-based resin, a polyisoprene-based resin, a fluorine-based resin, a thermoplastic elastomer such as an acrylonitrile-based thermoplastic elastomer, or the like, a copolymer or a modified product thereof, a resin produced by blending two or more of these resins, or the like can be used.

These resin binders can be used to obtain the adhesive function of sticking the layers to one another when the reinforcing fiber laminate is formed. Furthermore, the resin binders can be used for the purpose of ensuring a flow path for a matrix resin in resin impregnation, and for the purpose of strengthening the interval between the layers by using a resin including a material exhibiting high toughness.

As a form of fixing the carbon fiber bundles 201 with the resin binder 204, the resin binder 204 kept visible may be attached to and subjected to partial impregnation on the surfaces of the carbon fiber bundles 201, thereby binding the plurality of filaments included in the carbon fiber bundle, or the resin binder 204 may be subjected to impregnation in the carbon fiber bundles 201 so as to be invisible from the surface, thereby binding the plurality of filaments included in the carbon fiber bundle to each other. In addition, the resin binder may be wound around the carbon fiber bundles 201, or the carbon fiber bundle 201 may be coated with the resin binder.

The amount of the resin binder required for fixing the carbon fiber bundles 201 is preferably 25% by weight or less, more preferably 20% by weight or less, further preferably 15% by weight or less, based on the weight of the carbon fiber bundles 201. When the amount of the resin binder is more than 25% by weight, the improved viscosity of the matrix resin makes the fluidity likely to be decreased in molding a reinforcing fiber laminate obtained by arranging and laminating the tape material by the method of fiber placement, and thus, the productivity is likely to be decreased. In addition, because a long period of time is required for the flow of the matrix resin, the viscosity of the matrix resin is further increased, and a site that is impregnated with no resin is likely to be generated in the molded body, which also leads to deteriorated mechanical property of the molded body.

The softening point Ts (°C) of the fabric 203 is preferably higher than the softening point of the resin binder 204. When multiple types of thermoplastic resins constitute the fabric 203 herein, the softening point of the thermoplastic resin with the lowest softening point among the multiple types of thermoplastic resins is regarded as the softening point Ts (°C) of the fabric 203. In this regard, heating and pressurizing at a temperature that is higher than the softening point of the resin binder 204 and lower than the softening point of the fabric 203 can integrate the fabric 203 and the carbon fiber bundle group 202 with the melted resin binder 204 as an adhesive. In this case, the fabric 203 keeps the form of structure without melting, and the carbon fiber tape material 200 with excellent deformability can be obtained without impairing the deformability of the fabric 203.

In addition, the softening point (°C) of the resin binder 204 is preferably a temperature that is higher than 40°C and lower than the softening point Ts (°C) of the fabric 203. The use of such a resin binder can, at the temperature returned to room temperature by cooling or the like after the viscosity is reduced by heating, fix the plurality of filaments constituting the carbon fiber bundle to each other, and more reliably keep a certain form as a carbon fiber bundle. Then, when the form of the carbon fiber bundle is kept constant, the form of the carbon fiber bundle can be kept from collapsing in the case of the placement of the carbon fiber tape material 200 on a mold, and the application of a pressure or a tension to the carbon fiber tape material 200 by the method of fiber placement. As a result, the gaps 206 provided between the carbon fiber bundles 201 can be kept without being crushed, and the flow path of the matrix resin at the time of molding can be more reliably secured.

It is to be noted that in this specification, the "softening point" refers to a temperature at which a resin material such as a fabric or a resin binder softens/melts when the resin material reaches a temperature equal to or higher than the temperature. Specifically, when the resin material is a crystalline polymer, the melting point is referred to as the softening point; when the resin material is an amorphous polymer, the glass transition point is referred to as the softening point.

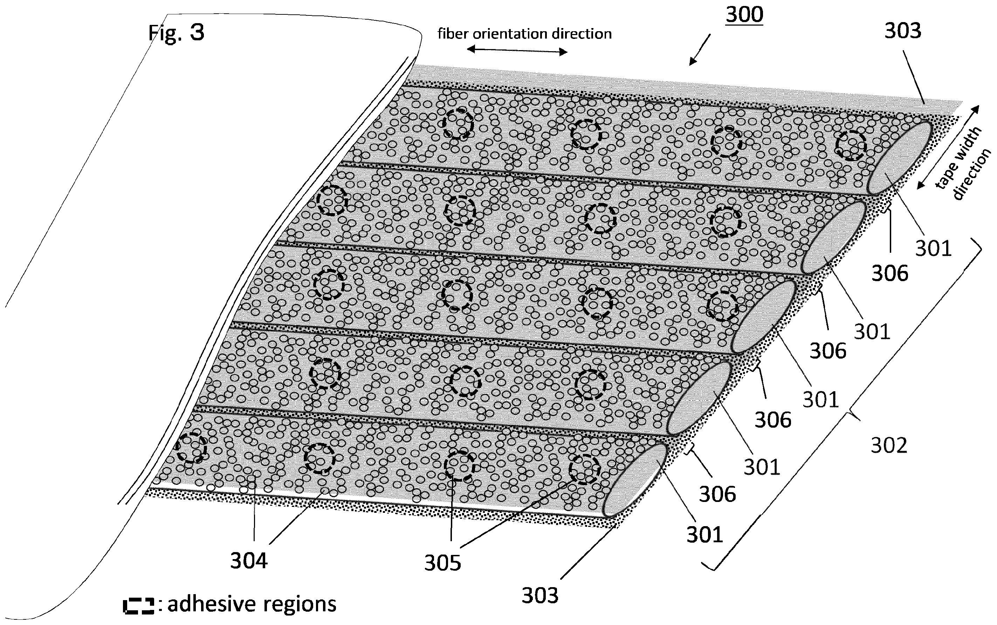

FIG. 3 shows a schematic perspective view of still another carbon fiber tape material 300 not in accordance with the present invention. In this carbon fiber tape material 300, as with the aspect of Fig. 2, a fabric 303 with regularity is placed on at least one surface (both surfaces in Fig. 3) of a carbon fiber bundle group 302 that has a plurality of carbon fiber bundles 301 arranged in parallel. The fabric 303 is integrated with the carbon fiber bundle group 302 with a resin binder 304 attached to the surface of the carbon fiber bundle group 302 for the purpose of keeping the form of each carbon fiber bundle 301. In the aspect shown in Fig. 3, of the resin binder 304 provided on the surface of the carbon fiber bundle group 302, only the resin binder 304 in the region surrounded by adhesive regions 305 is melted to contribute to bonding between the fabric 303 and the carbon fiber bundle group 302. The adhesive regions 305 are formed not continuously but discretely (intermittently) in the fiber orientation direction of the carbon fiber bundles 301 in at least a part of the carbon fiber tape material 300. The "adhesive region" herein refers to a region where the fabric 303 and the carbon fiber bundle group 302 are bonded to each other with the resin binder 304 interposed therebetween. The fabric 303 and the carbon fiber bundle group 302 are bonded to each other in at least some of the adhesive regions to be integrated with each other, thereby allowing the form of the carbon fiber tape material to be kept. The carbon fiber tape material 300 shown in Fig. 3 has the same configuration as the carbon fiber tape material 200 shown in Fig. 2 except for the foregoing respects.

The adhesive regions 305 are preferably formed discretely in the fiber orientation direction of the carbon fiber bundles 301 as described above. When the adhesive regions 305 extends over the entire tape to bond the carbon fiber bundle group 302 and the fabric 303 over the entire surface of the tape, the positions of the thermoplastic fibers constituting the fabric will be completely fixed by bonding to the carbon fiber bundles, thereby deteriorating the inherent deformability of the fabric. In Fig. 3, because the adhesive regions 305 are discretely dispersed in the fiber orientation direction, there is room for the fabric to be free to move locally, thus making it possible to suppress deterioration in fabric deformability due to bonding.

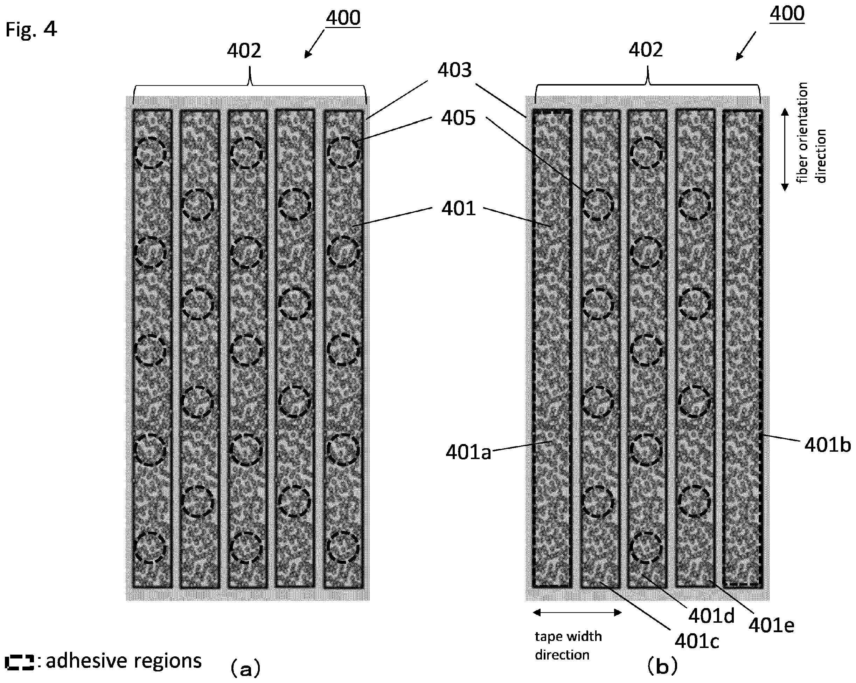

Furthermore, an aspect in which adhesive regions are discretely formed in the fiber orientation direction of the carbon fiber bundles will be described in detail below. A carbon fiber tape material 400 shown in Fig. 4(b) is a plan view of a carbon fiber tape material according to the present invention. According to the embodiment of Fig. 4(a), adhesive regions 405 where a fabric and a carbon fiber bundle group are bonded with a resin binder interposed therebetween are discretely formed in the fiber orientation direction of carbon fiber bundles 401 in the entire area of the carbon fiber tape material 400. According to the present embodiment, the adhesive regions 405 are discretely formed over the entire area of the carbon fiber tape material 400, and there is thus much room for the fabric to be free to move locally, thereby allowing excellent tape deformability to be exhibited. According to the embodiment of FIG. 4(b), of a carbon fiber bundle group 402, two carbon fiber bundles 401(a) and 401(b) located at both ends in a direction orthogonal to the fiber orientation direction of the carbon fiber bundles 401 are continuously bonded to a fabric 403 in the fiber orientation direction of the carbon fiber bundles, and carbon fiber bundles 401(c), 401(d), and 401(e) located between the two carbon fiber bundles 401(a) and 401(b) are intermittently bonded to the fabric 403 in the fiber orientation direction of the carbon fiber bundles. According to the present embodiment, the two carbon fiber bundles 401(a) and 401(b) located at both ends in the direction orthogonal to the fiber orientation direction of the carbon fiber bundles are continuously bonded to the fabric 403, thus allowing the fabric 403 to be kept from peeling off from the tape end, and allowing a balance to be achieved between the tape stability and the tape deformability. It is to be noted that in the carbon fiber tape material 400 shown in Figs. 4(a) and 4(b), each adhesive region 405 is preferably provided so as not to extend over a plurality of carbon fiber bundles.

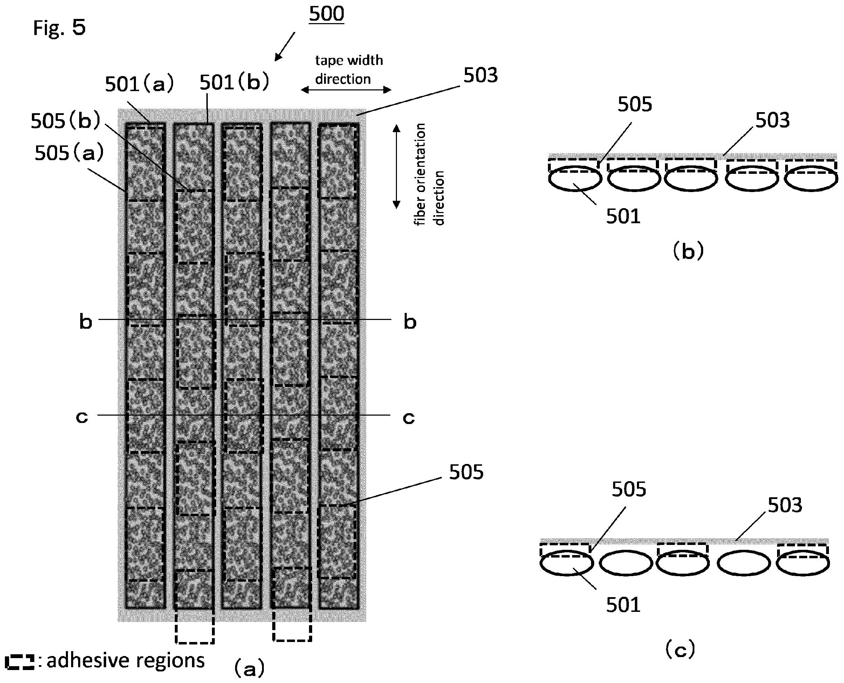

A carbon fiber tape material 500 shown in Fig. 5(a) is a plan view of another carbon fiber tape material not in accordance with the present invention. Figs. 5(b) and 5(c) respectively show a b-b cross section and a c-c cross section of the carbon fiber tape material 500. Also according to the embodiment, adhesive regions 505 where a fabric and a carbon fiber bundle group are bonded with a resin binder interposed therebetween are discretely formed in the fiber orientation direction of carbon fiber bundles 501 in the entire area of the carbon fiber tape material 500. Each adhesive region 505 is provided so as not to extend over a plurality of carbon fiber bundles. Further, for adjacent carbon fiber bundles (for example, 501(a) and 501(b)), the adhesive regions (for example, 505(a) and 505(b)) are shifted in the fiber orientation direction of the carbon fibers. According to the present embodiment, the adhesive regions provided respectively in the adjacent carbon fiber bundles are shifted in the fiber orientation direction of the carbon fibers, thereby allowing the relative positions of the adjacent carbon fiber bundles to vary independently without being fixed. Thus, when the fabric is deformed, the carbon fiber bundles are each allowed to move independently following the movements of parts of the fabric with the bundles bonded thereto.

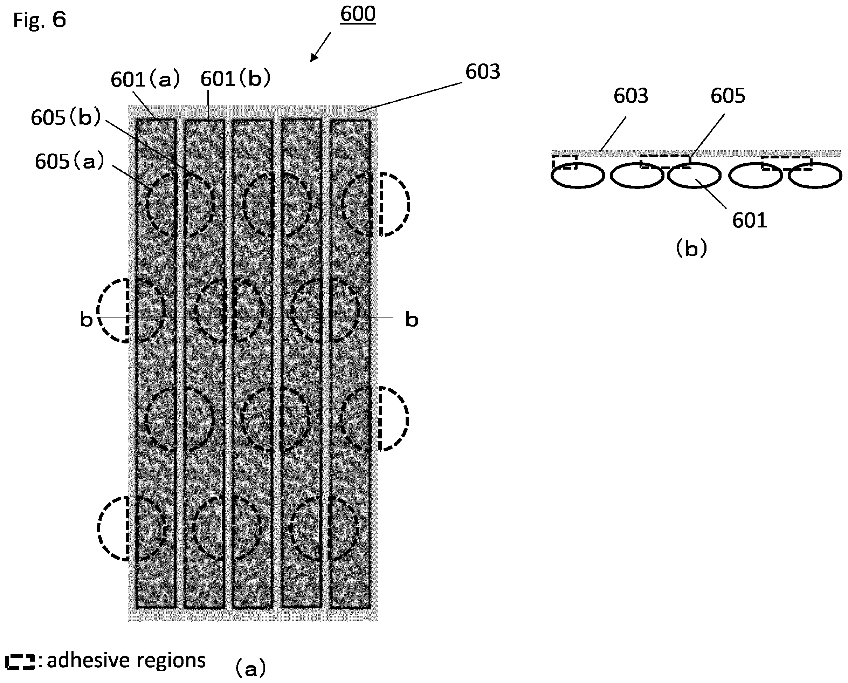

Further, adhesive regions may be provided as in Fig. 6(a). In a carbon fiber tape material 600 shown in Fig. 6(a), however, for adjacent carbon fiber bundles (for example, 601(a) and 601(b)), adhesive regions (for example, adhesive regions 605(a) and 605(b)) are not shifted in the fiber orientation direction of the carbon fibers. Thus, the positions of the adjacent carbon fiber bundles are fixed, thereby making it difficult for each carbon fiber bundle to move independently following the movements of parts of the fabric with the bundles bonded thereto. Accordingly, as compared with the case where the adhesive regions are not shifted in the fiber orientation direction of the carbon fibers in the adjacent carbon fiber bundles, the case where the adhesive regions are shifted is preferred because a tape with high deformability can be obtained. Further, Fig. 6 (a) is a plan view of the carbon fiber tape material 600, and Fig. 6 (b) is a b-b sectional view of the carbon fiber tape material 600.

As shown in Fig. 5, even when the adhesive regions 505 are provided to be substantially shifted in the fiber orientation direction of the carbon fibers, the following is more preferred. More specifically, in an arbitrary cross section in a direction orthogonal to the fiber orientation direction of the carbon fibers, the adhesive regions (for example, 505(a) and 505(b)) are kept from co-existing on the adjacent carbon fiber bundles (for example, 501(a) and 501(b)). In other words, in the adjacent carbon fiber bundles (for example, 501(a) and 501(b)), the adhesive regions (for example, 505(a) and 505(b)) are preferably provided so as to be shifted (as shown in Fig. 5 (c)), rather than partially overlapped (as shown in Fig. 5 (b)), in the fiber orientation direction of the carbon fibers. Such a configuration allows the carbon fiber tape material to exhibit more favorable deformability. To that end, in the carbon fiber tape material 500, the part with such a cross section as shown in Fig. 5(b) preferably falls within the range of 30% or less of all cross sections collected at regular intervals in the fiber orientation direction of the carbon fibers.

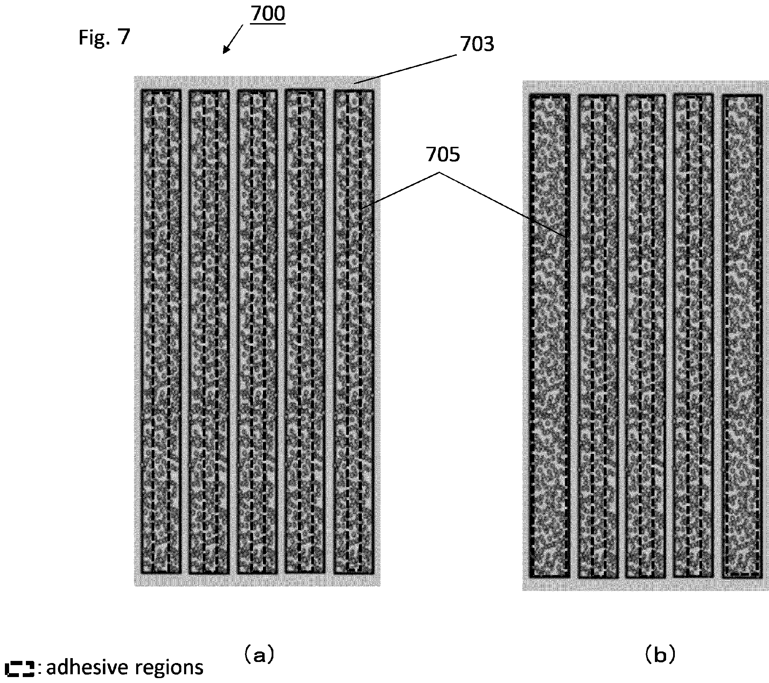

Furthermore, Figs. 7(a) and 7(b) show plan views of another carbon fiber tape material 700 not in accordance with the present invention. While Figs. 3 to 6 mentioned above show aspects in which the adhesive regions are discretely formed in the fiber orientation direction of the carbon fiber bundles, adhesive regions 705 in which a fabric and a carbon fiber bundle group are bonded with a resin binder interposed therebetween are discretely formed in a direction orthogonal to the fiber orientation direction of the carbon fiber bundles in the carbon fiber tape material 700 shown in Fig. 7. Even such a configuration allows adjacent carbon fiber bundles to move independently without fixing the relative positions of the carbon fiber bundles, thus allowing the carbon fiber tape material to demonstrate favorable deformations.

The carbon fiber tape material according to the present invention, configured as described above allows the following shear deformation performance to be delivered. More specifically, the tensile load F [N] measured at a shear angle $\theta$ [°] in the range from 0° to 45° with the use of a picture frame method by a two sides gripping method has no maximum value for the tensile load F [N] at the shear angle $\theta$ [°] between 0° and 1.0°, the maximum value of the tensile load F [N] measured at the shear angle $\theta$ [°] in the range from 0° to 45° is higher than 0.5 [N], and $\Delta F/\Delta\theta$ is larger than 0.1 and smaller than 1.0 at the shear angle $\theta$ [°] between 0.1° and 1.0°.

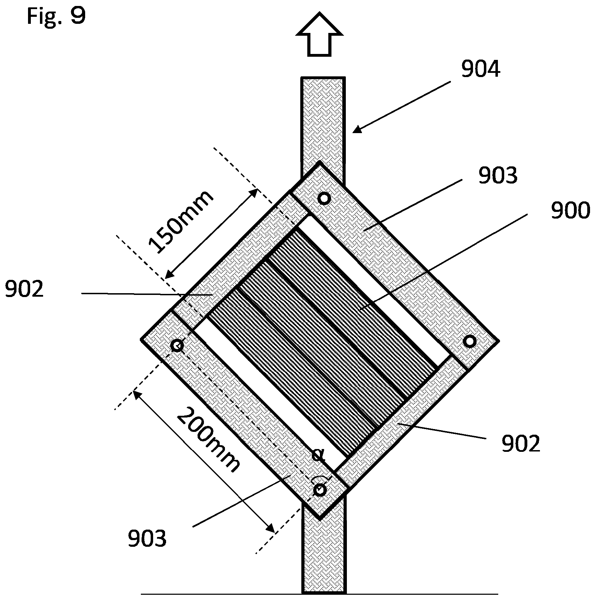

The picture frame method by the two sides gripping method, which is a method for evaluating shear deformation performance, will be described. Fig. 9 shows a schematic view of a picture frame method by a two sides gripping method. One or more carbon fiber tape materials 900 of 220 mm in length are arranged in parallel without any gap, and prepared such that the sum of the overall widths is 150 mm. After a gripping sections 902 are marked such that the gripping interval is 200 mm, the carbon fiber tape materials 900 are attached to a picture frame jig 904 so as to grip the two sides at both ends of the carbon fiber tape such that the gripping section 902 is 200 mm, the measurement angle $\alpha$ [°] is 90°, and the longitudinal direction of the carbon fiber tape is parallel to two sides 903 of the picture frame gripping no carbon fiber tape material. The picture frame jig is attached to a universal testing machine, not shown, such that the measurement angle $\alpha$ [°] is 90°, and then the picture frame jig is pulled in the vertical direction at a speed of 50 mm/min, and the tensile force F [N] and the measurement angle $\alpha$ at the time are measured. Thereafter, the shear angle $\theta$ [°] calculated from the following formula and $\Delta F/\Delta\theta$ at $\theta$ [°] between 0.1° and 1.0° are calculated.

$$\theta\,[°] \;=\; 90° \;-\; \alpha\ [°]$$

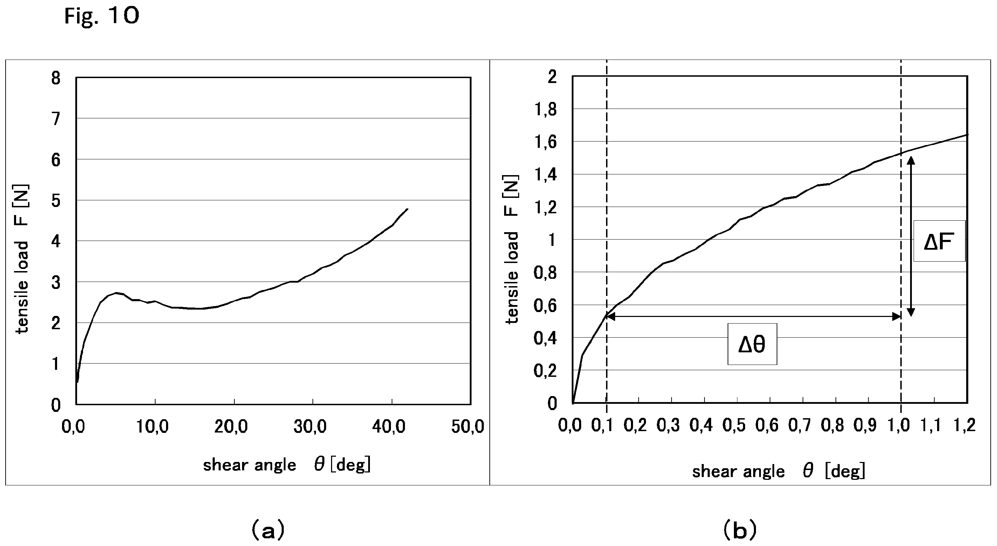

Fig. 10 shows an example of a shear angle-tensile load graph in the case of applying the picture frame method by the two sides gripping method to the carbon fiber tape material according to the present invention. Fig. 10(a) is a shear angle-tensile load graph in the case of testing at the shear angle $\theta$ [°] from 0 to 45, and Fig. 10(b) is an enlargement of the same graph around the shear angle $\theta$ [°] from 0 to 1.

In the carbon fiber tape material according to the present invention, the tensile load F preferably has no maximum value at the shear angle $\theta$ [°] between 0° and 1.0° in the case of testing at the shear angle $\theta$ [°] from 0° to 45°. Having the maximum value of the tensile load F [N] at the shear angle $\theta$ [°] between 0° and 1.0° means that the carbon fiber tape material fails to keep the form until the shear angle $\theta$ [°] reaches 1.0°, thereby collapsing. In this case, the value of $\Delta F/\Delta\theta$ fails to be evaluated as the shear deformation performance of the carbon fiber tape material.

For the carbon fiber tape material according to the present invention, when the tensile load F has no maximum value at the shear angle $\theta$ [°] between 0° and 1.0°, $\Delta F/\Delta\theta$ at the shear angle $\theta$ [°] between 0.1° and 1.0° is preferably smaller than 1.0, more preferably smaller than 0.4, and still more preferably less than 0.2. When $\Delta F/\Delta\theta$ is 1.0 or more, a large force is required for the shear deformation of the carbon fiber tape material, and favorable followability to a mold fails be achieved in the alignment and placement in the mold by the method of fiber placement. In contrast, $\Delta F/\Delta\theta$ is preferably larger than 0.1. When $\Delta F/\Delta\theta$ is 0.1 or less, the application of a slight force causes the carbon fiber tape material to undergo a significant shear deformation, thereby impairing the stability of the carbon fiber tape material.

For the carbon fiber tape material according to the present invention, the maximum value of the tensile load F is preferably more than 0.5 N, further preferably more than 1.0 N in the case of testing with the shear angle $\theta$ [°] from 0° to 45°. In the case of testing with the shear angle $\theta$ [°] from to 0° to 45°, the carbon fiber tape material fails to keep the tape form, due to peeling off between the carbon fiber bundle and the fabric material, and etc., when the maximum value of the tensile load F is 0.5 N or less.

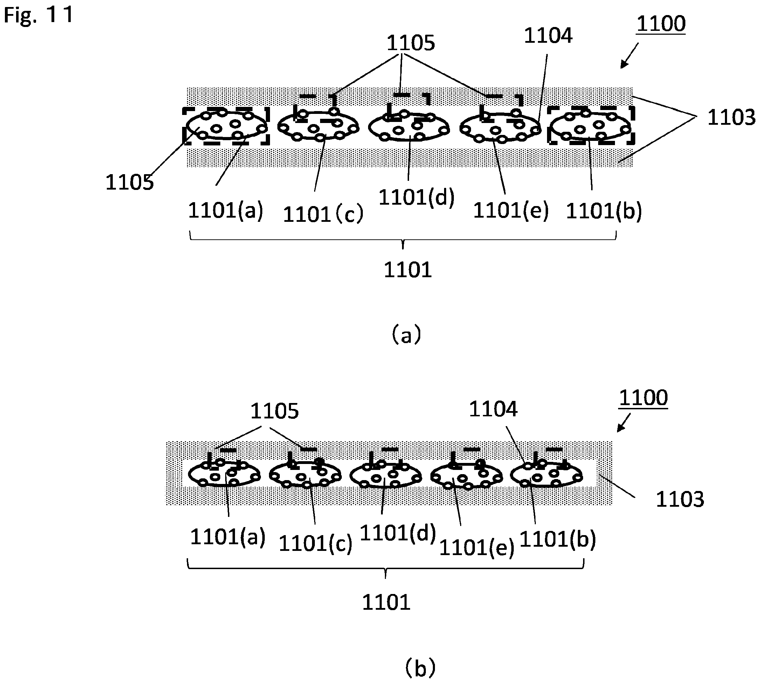

Further, for the carbon fiber tape material according to the present invention, for example, as shown in Fig. 11(a), a fabric 1103 is preferably placed on both surfaces of a carbon fiber bundle group 1102 to provide a tubular body (Fig. 11(a)) or a bag-like body (Fig. 11(b)) as a whole. More specifically, as shown in Fig. 11(a), two carbon fiber bundles 1101(a) and 1101(b) located at both ends in the direction orthogonal to the fiber orientation direction of the carbon fiber bundles 1101 are preferably, on both surfaces thereof, bonded to the fabric 1103, such that the carbon fiber bundles 1101(a) and 1101(b) at the both ends and the fabric 1103 at the both surfaces form a tubular closed system. This makes it possible to prevent the three inner carbon fiber bundles 1101(c), 1101(d), and 1101(e) from falling off. In addition, for the same reason, it is also preferable to place the fabric 1103 so as to enclose all of the carbon fiber bundles 1101 as in Fig. 11(b). The placement of the fabric on the both surfaces of the carbon fiber bundle group as described above makes it possible to keep the carbon fiber bundles from being detached during handling of the carbon fiber tape material, and makes it possible to improve the production stability of the carbon fiber tape material.

The carbon fiber tape material according to the present invention is used for a reinforcing fiber laminate. The reinforcing fiber laminate has a shape kept by arranging and laminating the carbon fiber tape material according to the present invention and at least partially sticking the interlayers. Such a configuration makes it possible to set the gap between the carbon fiber bundles constituting the reinforcing fiber laminate at any distance and then place the carbon fiber bundles. As a result, the productivity can be improved, such as that fact that the fluidity of the matrix resin during molding can be secured, and the fact that the types of resins injected and the variety of process window can be expanded.

Furthermore, the reinforcing fiber laminate with the carbon fiber tape material used is preferably impregnated with a matrix resin to obtain a fiber reinforced resin composite. The above-described configuration allows an obtained fiber reinforced resin composite to be completely impregnated to the inside thereof with the resin, thereby providing a high mechanical property.

[Examples]

The carbon fiber tape material according to the present invention will be described based on examples. Table 1 shows the conditions and results of examples and a comparative example.

(Example 1)

<Reinforcing Fiber Bundle>

As a reinforcing fiber bundle, a previously sized carbon fiber "TORAYCA" (registered trademark) T800SC manufactured by Toray Industries, Inc. and having 24,000 carbon fiber filaments (N = 24 K) was used.

<Fabric>

As a fabric, a knitted fabric (material: polyamide, basis weight: 8 $g/m^2$) with regularity was used, which was obtained by warp knitting into a tulle structure with the use of a tricot machine.

<Measurement of Fabric Elongation Rate>

The fabric elongation rate was measured as follows with reference to JIS L 1096 8.16.1. More specifically, the fabric was cut into a width of 50 mm and a length of 300 mm such that the wale direction of the fabric was the longitudinal direction, and the gripping section was marked such that the gripping interval was 200 mm. After one end of the test piece was fixed with a clamp, a load of 80 mN/50 mm was gently applied, and the length between the marks after holding for 1 minute was then measured. As a result of calculating the fabric elongation rate from the following formula, the elongation rate was 52%.

$$E_p = \{(L_1 - L_0)/L_0\} \times 100$$

$E_p$: fabric elongation rate (%)

$L_0$: original fabric length between marks (mm)

$L_1$: fabric length at load application (mm)

<Carbon Fiber Tape Material>

With the use of a carbon fiber bundle manufacturing apparatus (not shown), one carbon fiber bundle was drawn out from a bobbin, the width was reduced without slitting while adjusting the thickness, and thereafter, heat-meltable binder particles (average particle size: 0.2 mm) with a softening point temperature of 80°C were sprayed onto the surface of the carbon fiber bundle. The binder particles were sprayed so as to have a proportion of 5% by weight (the weight of the obtained carbon fiber bundle was considered as 100%), and then melted and cooled to obtain a carbon fiber bundle of 4.8 mm in yarn width with a form fixed.

Ten carbon fiber bundles were aligned in parallel in the longitudinal direction, a knitted fabric (fabric) with a softening point temperature of 200°C was then placed on one surface of the carbon fiber bundles, and these were heated at 120°C to melt the binder particles so as to partially bond (the binder particles were arranged in a staggered manner as spherical bodies of 4.5 mm in diameter on the carbon fiber bundles other than those at both ends, and the binder particles were arranged over the entire surface on the two carbon fiber bundles at the both ends) and then integrate the knitted fabric and the carbon fiber bundles with the binder particles interposed therebetween as shown in Fig. 4(b). This integration provided a carbon fiber tape material with a width of 50 mm, a tape basis weight of 206 $g/m^2$ excluding the fabric, and each gap of 0.2 mm between the carbon fiber bundles.

<Deformability of Carbon Fiber Tape Material>

As an evaluation for the deformability of the carbon fiber tape material, the picture frame method by the two sides grip method was performed. Three carbon fiber tape materials with a length of 220 mm and a width of 50 mm were arranged in parallel, and marks were put on the gripping section such that the gripping interval was 200 mm. Then, the three carbon fiber tape materials arranged in parallel were attached to the picture frame jig shown in Fig. 9 so as to grip two sides such that the gripping section was 200 mm and that the measurement angle α [°] was 90°, and subjected to a measurement. As a result, the maximum value of the tensile load F [N] at the shear angle θ [°] in the range from 0° to 45° was larger than 0.5 [N], without the maximum value at the shear angle θ [°] in the range from 0° to 1.0°. Further, with ΔF/Δθ = 0.3, it has been confirmed that the carbon fiber tape material exhibits favorable deformability against the in-plane shear force.

<Reinforcing Fiber Laminate>

With the use of a fiber placement device (not shown), the carbon fiber tape materials obtained in the manner as mentioned above were aligned in one direction and then placed on a stand so as to provide a gap of 0.7 mm between the respective carbon fiber tape materials; the carbon fiber tape materials were repeatedly cut and placed into a square shape of 300 mm × 300 mm to prepare a sheet substrate. The adjacent carbon fiber tape materials were bonded and integrated by lapping adjacent knitted fabrics by 1 mm and heating the lapped part at 200°C to prepare a sheet substrate.

The obtained sheet substrate was placed in a pyramid (tetrahedral) shaped mold (bottom surface: equilateral triangle of 14 cm on a side, height: 7 cm), and the upper mold was lowered for press draping while applying a tension to the sheet substrate, and then, the lower mold was heated at 120°C for 10 minutes. As a result, the sheet substrate exhibited a favorable draping property without large wrinkles. After the sheet substrate was sequentially subjected to draping layer by layer into the pyramid-shaped mold in the same procedure, the upper mold was closed, and the lower mold was then heated at 120°C for 10 minutes. As a result, a favorable reinforcing fiber laminate was obtained without large wrinkles.

<Molded Body>

The obtained reinforcing fiber laminate was placed in the lower mold in the above-described pyramid shape, vacuum bagging was performed with the use of a bagging film, and the mold was then placed in an oven at an atmospheric temperature of 100°C. Thereafter, a matrix resin (epoxy resin) was injected and cured in an atmosphere at 180°C. As a result, a favorable molded body without any resin-unimpregnated site was obtained.

(Example 2)

A carbon fiber tape was obtained in the same manner as in Example 1 except for the following point.

- As a fabric, a knitted fabric (material: polyamide, basis weight: 10 g/m$^2$) with regularity was used, which was obtained by warp knitting into a chain + half structure with the use of a tricot machine.

<Measurement of Fabric Elongation Rate>

As a result of measuring the elongation rate in the same manner as in Example 1, the elongation rate in the wale direction was 35%.

<Deformability of Carbon Fiber Tape Material>

As a result of performing the picture frame method by the two sides grip method in the same manner as in Example 1, the maximum value of the tensile load F [N] at the shear angle θ [°] in the range from 0° to 45° was larger than 0.5 [N], without the maximum value at the shear angle θ [°] in the range from 0° to 1.0°. Further, with ΔF/Δθ = 0.37, it has been confirmed that the carbon fiber tape material exhibits favorable deformability against the in-plane shear force.

<Reinforcing Fiber Laminate>

As a result of performing the same method as in Example 1, a favorable reinforcing fiber laminate was obtained without twisting or wrinkling the sheet substrate.

<Molded Body>

As a result of performing the same method as in Example 1, a favorable molded body without any resin-unimpregnated site was obtained.

(Reference Example 3)

A carbon fiber tape was obtained in the same manner as in Example 1 except for the following point.

- After carbon fiber bundles of 3.5 mm in yarn width with a form fixed were obtained in the same manner as in Example 1, ten carbon fiber bundles were aligned in parallel in the longitudinal direction, and each gap between the carbon fiber bundles was adjusted to about 0.3 mm, such that the finally obtained carbon fiber tape material was 38 mm in width and 271 g/m$^2$ in tape basis weight excluding the fabric.

- The knitted fabric and the carbon fiber bundles were, as shown in Fig. 4(a), partially bonded (the binder particles were arranged in a staggered manner as spherical bodies of 4.5 mm in diameter) and then integrated with the binder particles interposed therebetween.

<Deformability of Carbon Fiber Tape Material>

As a result of performing the picture frame method by the two sides grip method in the same manner as in Example 1, the maximum value of the tensile load F [N] at the shear angle θ [°] in the range from 0° to 45° was larger than 0.5 [N], without the maximum value at the shear angle θ [°] in the range from 0° to 1.0°. Further, with ΔF/Δθ = 0.17, it has been confirmed that the carbon fiber tape material exhibits favorable deformability against the in-plane shear force.

<Reinforcing Fiber Laminate>

As a result of performing the same method as in Example 1, a favorable reinforcing fiber laminate was obtained without twisting or wrinkling the sheet substrate.

<Molded Body>

As a result of performing the same method as in Example 1, a favorable molded body without any resin-unimpregnated site was obtained.

(Reference Example 4)

A carbon fiber tape was obtained in the same manner as in Example 1 except for the following point.

- After carbon fiber bundles of 7.0 mm in yarn width with a form fixed were obtained in the same manner as in Example 1, five carbon fiber bundles were aligned in parallel in the longitudinal direction, and each gap between the carbon fiber bundles was adjusted to about 0.7 mm, such that the finally obtained carbon fiber tape material was 38 mm in width and 135 g/m$^2$ in tape basis weight excluding the fabric.

- The knitted fabric and the carbon fiber bundles were, as shown in Fig. 7(a), partially bonded (among the respective carbon fiber bundles (7 mm in width), the carbon fiber bundles corresponding to 5 mm in width from the center were continuously bonded in the longitudinal direction) in a discrete manner in a direction orthogonal to the fiber orientation of the carbon fiber bundles, and then integrated, with the binder particles interposed therebetween.

<Deformability of Carbon Fiber Tape Material>

As a result of performing the picture frame method by the two sides grip method in the same manner as in Example 1, the maximum value of the tensile load F [N] at the shear angle θ [°] in the range from 0° to 45° was larger than 0.5 [N], without the maximum value at the shear angle θ [°] in the range from 0° to 1.0°. Further, with ΔF/Δθ = 0.33, it has been confirmed that the carbon fiber tape material exhibits favorable deformability against the in-plane shear force.

<Reinforcing Fiber Laminate>

As a result of performing the same method as in Example 1, a favorable reinforcing fiber laminate was obtained without twisting or wrinkling the sheet substrate.

<Molded Body>

As a result of performing the same method as in Example 1, a favorable molded body without any resin-unimpregnated site was obtained.

(Reference Example 5)

A carbon fiber tape was obtained in the same manner as in Example 1 except for the following point.

-   As a fabric, a non-woven fabric (material: polyamide, basis weight: 6 g/m$^2$) from Spunfab Ltd. was used.

-   After carbon fiber bundles of 3.5 mm in yarn width with a form fixed were obtained in the same manner as in Example 1, ten carbon fiber bundles were aligned in parallel in the longitudinal direction, and each gap between the carbon fiber bundles was adjusted to 0.3 mm, such that the finally obtained carbon fiber tape material was 38 mm in width and 271 g/m$^2$ in tape basis weight excluding the fabric.

-   The non-woven fabric and the carbon fiber bundles were, as shown in Fig. 4(a), partially bonded (the binder particles were arranged in a staggered manner as spherical bodies of 4.5 mm in diameter) and then integrated with the binder particles interposed therebetween.

<Measurement of Fabric Elongation Rate>

As a result of measuring the elongation rate in the same manner as in Example 1, the elongation rate in the wale direction was 10%, thus providing favorable formability.

<Deformability of Carbon Fiber Tape Material>

As a result of performing the picture frame method by the two sides grip method in the same manner as in Example 1, the maximum value of the tensile load F [N] at the shear angle θ [°] in the range from 0° to 45° was larger than 0.5 [N], without the maximum value at the shear angle θ [°] in the range from 0° to 1.0°. Further, with $\Delta F/\Delta\theta = 0.23$, it has been confirmed that the carbon fiber tape material exhibits favorable deformability against the in-plane shear force.

<Reinforcing Fiber Laminate>

As a result of performing the same method as in Example 1, a favorable reinforcing fiber laminate was obtained without twisting or wrinkling the sheet substrate.

<Molded Body>

As a result of performing the same method as in Example 1, a favorable molded body without any resin-unimpregnated site was obtained.

(Comparative Example 1)

A carbon fiber tape was obtained in the same manner as in Example 1 except for the following point.

-   As a fabric, a non-woven fabric (material: polyamide, softening point: 130°C, basis weight: 10 g/m$^2$) from Spunfab Ltd. was used.

-   Ten carbon fiber bundles without any binder particle attached thereto were aligned in parallel in the longitudinal direction, a non-woven fabric with a softening point temperature of 130°C was then placed on one surface of the carbon fiber bundles, and these were heated at 130°C to melt the nonwoven fabric so as to entirely bond and then integrate the non-woven fabric and the carbon fiber bundles. This integration provided a carbon fiber tape material with a width of 50 mm, a tape basis weight of 206 g/m$^2$ excluding the fabric, and each gap of 0.2 mm between the carbon fiber bundles.

<Measurement of Fabric Elongation Rate>

As a result of measuring the elongation rate in the same manner as in Example 1, the elongation rate in the wale direction was 3%, thus failing to provide favorable formability.

<Deformability of Carbon Fiber Tape Material>

As a result of performing the picture frame method by the two sides grip method in the same manner as in Example 1, the maximum value of the tensile load F [N] at the shear angle $\theta$ [°] in the range from 0° to 45° was larger than 0.5 [N], without the maximum value at the shear angle $\theta$ [°] in the range from 0° to 1.0°. Further, with $\Delta F/\Delta\theta$ = 1.2, it has been confirmed that the carbon fiber tape material exhibits no favorable deformability against the in-plane shear force.

<Reinforcing Fiber Laminate>

As a result of performing the same method as in Example 1, the sheet substrate was found to be twisted and wrinkled, and so any favorable reinforcing fiber laminate was not obtained.

<Molded Body>

As a result of performing the same method as in Example 1, a molded body with a resin-unimpregnated site at the wrinkled site was obtained.

[Table 1]

In Table 1, Examples 3 and 5 are Reference Examples.

| | Fabric Form | Fabric Basis Weight [g/m$^2$] | Fabric Elongation Rate [%] | Gap between Fiber Bundles [mm] | Tape Width [mm] | Tape Basis Weight excluding Fabric [g/m$^2$] | Tape Basis Weight [g/m$^2$] | Adhesive Pattern | $\Delta F/\Delta\theta$ |
|---|---|---|---|---|---|---|---|---|---|
| Example 1 | Knitted Fabric (tulle) | 8 | 52 | 0.2 | 50 | 206 | 214 | Fig. 4(b) | 0.3 |
| Example 2 | Knitted Fabric (chain + half) | 10 | 35 | 0.2 | 50 | 206 | 216 | Fig. 4(b) | 0.37 |
| Example 3 | Knitted Fabric (tulle) | 8 | 52 | 0.3 | 38 | 271 | 279 | Fig. 4(a) | 0.17 |
| Example 4 | Knitted Fabric (tulle) | 8 | 52 | 0.7 | 38 | 135 | 143 | Fig. 7(a) | 0.33 |
| Example 5 | Nonwoven Fabric | 6 | 10 | 0.3 | 38 | 271 | 277 | Fig. 4(a) | 0.23 |
| Comparative Example 1 | Nonwoven Fabric | 10 | 3 | 0.2 | 50 | 206 | 216 | Entire Area | 1.2 |

INDUSTRIAL APPLICABILITY

The carbon fiber tape material according to the present invention and the reinforcing fiber laminate with the material used are excellent in the impregnation property with a matrix resin, and the molded body obtained with the use of the reinforcing fiber laminate is also suitably used, in particular, for large members for aircraft, automobiles, ships, and the like and members for general industrial applications such as windmill blades.

DESCRIPTION OF REFERENCE SIGNS

100, 200, 300, 400, 500, 900, 1100: Carbon fiber tape material

101, 201, 301, 401, 501, 601, 1101: Carbon fiber bundle

102, 202, 302, 402, 1102: Carbon fiber bundle group

103, 203, 303, 403, 503, 603, 703, 803, 1103: Fabric

106, 206, 306: Gap

204, 304, 1104: Resin binder

305, 405, 505, 605, 705, 1105: Adhesive region

807: Clamp

808: Mark

902: Gripping section

903: Two sides gripping no carbon fiber tape material

904: Picture frame jig

**Claims**

1. A carbon fiber tape material (400) wherein a carbon fiber bundle group (402) comprising a plurality of carbon fiber bundles (401) arranged in parallel with a fiber orientation direction is integrated with a fabric (403), the carbon fiber tape material (400) satisfying the following (a) to (c):

   (a) the fabric (403)comprises one or more thermoplastic resins;
   (b) the carbon fiber tape material (400) excluding the fabric (403) is between 120 $g/m^2$ and 400 $g/m^2$ in basis weight; and
   (c) a fabric elongation rate $E_p$ (%) with a load of 80 mN/50 mm applied to the fabric (403) is 5% to 100% in at least one direction of the fabric (403)

$$E_p = [(L_1 - L_0)/L_0] \times 100$$

   $E_p$: fabric elongation rate (%)
   $L_0$: original fabric length between marks (mm)
   $L_1$: fabric length at load application (mm),

   wherein the carbon fiber bundle group (402) and the fabric (403) are integrated by bonding, with a resin binder attached to at least one surface of the carbon fiber bundle group (402) interposed therebetween, wherein an adhesive region (405) where the fabric (403) and the carbon fiber bundle group (402) are bonded with the resin binder interposed therebetween is discretely formed in the fiber orientation direction of the carbon fiber bundles (401) in at least a part of the carbon fiber tape material (400), **characterized in that** of the carbon fiber bundle group (402), two carbon fiber bundles (401(a), 401(b)) located at both ends in a direction orthogonal to the fiber orientation direction of the carbon fiber bundles (401) are continuously bonded to the fabric (403) in the fiber orientation direction of the carbon fiber bundles (401), and the other carbon fiber bundles (401(c), 401(d), 401(e)) located between the two carbon fiber bundles (401(a), 401(b)) are intermittently bonded to the fabric (403) in the fiber orientation direction of the carbon fiber bundles (401).

2. The carbon fiber tape material (400) according to claim 1, wherein the fabric (403) has regularity.

3. The carbon fiber tape material (400) according to claim 1 or 2, wherein a gap of 0.1 mm to 1 mm is provided between the carbon fiber bundles (401).

4. The carbon fiber tape material (400) according to any of claims 1 to 3, wherein the carbon fiber tape material (400) is 2 mm to 2000 mm in tape width.

5. The carbon fiber tape material (400) according to any of claims 1 to 4, wherein, of the adhesive region (405) where the fabric (403) and the carbon fiber bundle group (402) are bonded with the resin binder interposed therebetween, the adhesive region (405) is shifted in the fiber orientation direction of the carbon fiber (401) in the adjacent carbon fiber bundles (401).

6. The carbon fiber tape material (400) according to any one of claims 1 to 4, wherein an adhesive region (405) where the fabric (403) and the carbon fiber bundle group (402) are bonded with the resin binder interposed therebetween is discretely formed in a direction orthogonal to the fiber orientation of the carbon fiber bundles (401) in at least a part of the carbon fiber tape material (400).

7. The carbon fiber tape material (400) according to any of claims 1 to 6, wherein a tensile load F [N] measured at a shear angle $\theta$ [°] in a range from 0° to 45° by using a picture frame method by a two sides grip method has no maximum value for the tensile load F [N] at the shear angle $\theta$ [°] between 0° and 1.0°, the maximum value of the tensile load F [N] measured at the shear angle $\theta$ [°] in the range from 0° to 45° is higher than 0.5 [N], and $\Delta F/\Delta \theta$ is larger than 0.1 and smaller than 1.0 at the shear angle $\theta$ [°] between 0.1° and 1.0°.

8. The carbon fiber tape material (400) according to claims 1 to 7, wherein the fabric (403) has a form of a tubular body or a bag-like body.

9. A reinforcing fiber laminate comprising the carbon fiber tape material (400) according to any of claims 1 to 8.

10. A molded body comprising the reinforcing fiber laminate according to claim 9.

**Patentansprüche**

1. Kohlefaserbandmaterial (400), wobei eine Kohlefaserbündelgruppe (402), die mehrere Kohlefaserbündel (401) umfasst, die parallel zu einer Faserorientierungsrichtung angeordnet sind, in ein Gewebe (403) integriert ist, wobei das Kohlefaserbandmaterial (400) die folgenden (a) bis (c) erfüllt:

(a) das Gewebe (403) umfasst ein oder mehrere thermoplastische Harze;
(b) das Kohlefaserbandmaterial (400), ausgenommen das Gewebe (403), hat ein Flächengewicht zwischen 120 g/m$^2$ und 400 g/m$^2$ ; und
(c) eine Gewebedehnungsrate $E_p$ (%) bei einer auf das Gewebe (403) aufgebrachten Last von 80 mN/50 mm beträgt 5 % bis 100 % in mindestens einer Richtung des Gewebes (403)

$$E_p = [(L_1 - L_0)/L_0] \times 100$$

$E_p$: Gewebedehnungsrate (%)
$L_0$: ursprüngliche Gewebelänge zwischen Markierungen (mm)
$L_1$: Gewebelänge bei Lastaufbringung (mm),

wobei die Kohlefaserbündelgruppe (402) und das Gewebe (403) durch Binden integriert sind, wobei ein Harzbindemittel an mindestens einer Oberfläche der Kohlefaserbündelgruppe (402) angebracht ist, die dazwischen angeordnet ist,
wobei ein Klebebereich (405), in dem das Gewebe (403) und die Kohlefaserbündelgruppe (402) mit dem dazwischen angeordneten Harzbindemittel gebunden sind, in der Faserorientierungsrichtung der Kohlefaserbündel (401) in mindestens einem Teil des Kohlefaserbandmaterials (400) diskret ausgebildet ist, **dadurch gekennzeichnet, dass**
von der Kohlefaserbündelgruppe (402) zwei Kohlefaserbündel (401(a), 401(b)), die sich an beiden Enden in einer Richtung orthogonal zu der Faserorientierungsrichtung der Kohlefaserbündel (401) befinden, kontinuierlich an das Gewebe (403) in der Faserorientierungsrichtung der Kohlefaserbündel (401) gebunden sind, und die anderen Kohlefaserbündel (401(c), 401(d), 401(e)), die sich zwischen den zwei Kohlefaserbündeln (401(a), 401(b)) befinden, intermittierend an das Gewebe (403) in der Faserorientierungsrichtung der Kohlefaserbündel (401) gebunden sind.

2. Kohlefaserbandmaterial (400) nach Anspruch 1, wobei das Gewebe (403) Regelmäßigkeit hat.

3. Kohlefaserbandmaterial (400) nach Anspruch 1 oder 2, wobei ein Spalt von 0,1 mm bis 1 mm zwischen den Kohlefaserbündeln (401) vorgesehen ist.

4. Kohlefaserbandmaterial (400) nach einem der Ansprüche 1 bis 3, wobei das Kohlefaserbandmaterial (400) eine Bandbreite von 2 mm bis 2000 mm hat.

5. Kohlefaserbandmaterial (400) nach einem der Ansprüche 1 bis 4, wobei von dem Klebebereich (405), in dem das Gewebe (403) und die Kohlefaserbündelgruppe (402) mit dem dazwischen angeordneten Harzbindemittel gebunden sind, der Klebebereich (405) in der Faserorientierungsrichtung der Kohlefaser (401) in den benachbarten Kohlefaserbündeln (401) verschoben ist.

6. Kohlefaserbandmaterial (400) nach einem der Ansprüche 1 bis 4, wobei ein Klebebereich (405), in dem das Gewebe (403) und die Kohlefaserbündelgruppe (402) mit dem dazwischen angeordneten Harzbindemittel gebunden sind, in einer Richtung orthogonal zu der Faserorientierung der Kohlefaserbündel (401) in mindestens einem Teil des Kohlefaserbandmaterials (400) diskret ausgebildet ist.

7. Kohlefaserbandmaterial (400) nach einem der Ansprüche 1 bis 6, wobei eine Zuglast F [N], gemessen bei einem Scherwinkel $\theta$ [°] in einem Bereich von 0° bis 45° unter Verwendung eines Bildrahmenverfahrens durch ein Zwei-Seiten-Greifverfahren, keinen Maximalwert für die Zuglast F [N] bei dem Scherwinkel $\theta$ [°] zwischen 0° und 1,0° hat, der Maximalwert der Zuglast F [N], gemessen bei dem Scherwinkel $\theta$ [°] in dem Bereich von 0° bis 45°, höher als 0,5 [N] ist und $\Delta F/\Delta\theta$ größer als 0,1 und kleiner als 1,0 bei dem Scherwinkel $\theta$ [°] zwischen 0,1° und 1,0° ist.

8. Kohlefaserbandmaterial (400) nach einem der Ansprüche 1 bis 7, wobei das Gewebe (403) eine Form eines röhrenförmigen Körpers oder eines beutelartigen Körpers hat.

9. Verstärkungsfaserlaminat, umfassend das Kohlefaserbandmaterial (400) nach einem der Ansprüche 1 bis 8.

10. Formkörper, umfassend das Verstärkungsfaserlaminat nach Anspruch 9.

## Revendications

1. Matériau de ruban de fibres de carbone (400) dans lequel un groupe de faisceaux de fibres de carbone (402) comprenant une pluralité de faisceaux de fibres de carbone (401) agencés en parallèle avec une direction d'orientation de fibres est intégré avec un tissu (403), le matériau de ruban de fibres de carbone (400) satisfaisant les (a) à (c) suivants :

(a) le tissu (403) comprend une ou plusieurs résines thermoplastiques ;
(b) le matériau de ruban de fibres de carbone (400) à l'exclusion du tissu (403) est compris entre 120 g/m$^2$ et 400 g/m$^2$ en poids de base ; et
(c) un taux d'allongement de tissu $E_p$ (%) avec une charge de 80 mN/50 mm appliquée au tissu (403) est de 5 % à 100 % dans au moins une direction du tissu (403)

$$E_p = [(L_1 - L_0)/L_0] \times 100$$

$E_p$ : taux d'allongement de tissu (%)
$L_0$ : longueur de tissu d'origine entre les marques (mm)
$L_1$ : longueur de tissu à l'application de la charge (mm),

dans lequel le groupe de faisceaux de fibres de carbone (402) et le tissu (403) sont intégrés par liaison, avec un liant de résine fixé à au moins une surface du groupe de faisceaux de fibres de carbone (402) interposé entre eux,

dans lequel une région adhésive (405) où le tissu (403) et le groupe de faisceaux de fibres de carbone (402) sont liés avec le liant de résine interposé entre eux est formée de manière discrète dans la direction d'orientation de fibres des faisceaux de fibres de carbone (401) dans au moins une partie du matériau de ruban de fibres de carbone (400), **caractérisé en ce que**

du groupe de faisceaux de fibres de carbone (402), deux faisceaux de fibres de carbone (401(a), 401(b)) situés aux deux extrémités dans une direction orthogonale à la direction d'orientation de fibres des faisceaux de fibres de carbone (401) sont liés de manière continue au tissu (403) dans la direction d'orientation de fibres des faisceaux de fibres de carbone (401), et les autres faisceaux de fibres de carbone (401(c), 401(d), 401(e)) situés entre les deux faisceaux de fibres de carbone (401(a), 401(b)) sont liés de manière intermittente au tissu (403) dans la direction d'orientation de fibres des faisceaux de fibres de carbone (401).

2. Matériau de ruban de fibres de carbone (400) selon la revendication 1, dans lequel le tissu (403) a une régularité.

3. Matériau de ruban de fibres de carbone (400) selon la revendication 1 ou 2, dans lequel un espace de 0,1 mm à 1 mm est prévu entre les faisceaux de fibres de carbone (401).

4. Matériau de ruban de fibres de carbone (400) selon l'une quelconque des revendications 1 à 3, dans lequel le matériau de ruban de fibres de carbone (400) a une largeur de ruban de 2 mm à 2000 mm.

5. Matériau de ruban de fibres de carbone (400) selon l'une quelconque des revendications 1 à 4, dans lequel, de la région adhésive (405) où le tissu (403) et le groupe de faisceaux de fibres de carbone (402) sont liés avec le liant de résine interposé entre eux, la région adhésive (405) est décalée dans la direction d'orientation de fibres des fibres de carbone (401) dans les faisceaux de fibres de carbone (401) adjacents.

6. Matériau de ruban de fibres de carbone (400) selon l'une quelconque des revendications 1 à 4, dans lequel une région adhésive (405) où le tissu (403) et le groupe de faisceaux de fibres de carbone (402) sont liés avec le liant de résine interposé entre eux est formée de manière discrète dans une direction orthogonale à l'orientation de fibres des faisceaux de fibres de carbone (401) dans au moins une partie du matériau de ruban de fibres de carbone (400).

7. Matériau de ruban de fibres de carbone (400) selon l'une quelconque des revendications 1 à 6, dans lequel une charge de traction F [N] mesurée à un angle de cisaillement θ [°] dans une plage de 0° à 45° en utilisant un procédé de trame d'image par un procédé de préhension à deux côtés n'a pas de valeur maximale pour la charge de traction F [N] à l'angle de cisaillement θ [°] entre 0° et 1,0°, la valeur maximale de la charge de traction F [N] mesurée à l'angle de cisaillement θ [°] dans la plage de 0° à 45° est supérieure à 0,5 [N], et ΔF/Δθ est supérieur à 0,1 et inférieur à 1,0 à l'angle de cisaillement θ [°] entre 0,1° et 1,0°.

8. Matériau de ruban de fibres de carbone (400) selon les revendications 1 à 7, dans lequel le tissu (403) a une forme d'un corps tubulaire ou d'un corps de type sac.

9. Stratifié de fibres de renforcement comprenant le matériau de ruban de fibres de carbone (400) selon l'une quelconque des revendications 1 à 8.

10. Corps moulé comprenant le stratifié de fibres de renforcement selon la revendication 9.

Fig. 1

tape longitudinal direction

tape width direction

100

101

106

101

106

101

106

101

106

101

102

103

EP 4 059 685 B1

Fig. 2

200

tape width direction

tape longitudinal direction

201
206
201
206
201
206
201
206
201

202

203

204

Fig. 3

300

fiber orientation direction

tape width direction

303

301
306
301
306
301
306
301
306
301
306
301

302

303

305

304

⌐ ¬
L ⌐ : adhesive regions

Fig. 4

: adhesive regions    (a)

fiber orientation direction

tape width direction    (b)

400

402

403

405

401

401a

401b

401d

401e

401c

EP 4 059 685 B1

# Fig. 5

500

501(a)  501(b)  tape width direction  503

505(b)
505(a)

fiber orientation direction

b —— b

c —— c

505

□: adhesive regions  (a)

505  503

501

(b)

505  503

501

(c)

EP 4 059 685 B1

Fig. 6

600

603

601(b)

601(a)

601

605(b)

605(a)

605

603

b

b

(a)

(b)

: adhesive regions

Fig. 7 — 700, 703, 705

(a)     (b)

⬛: adhesive regions

Fig. 8

(a)                    (b)

EP 4 059 685 B1

Fig. 9

EP 4 059 685 B1

Fig. 10

（a）

（b）

EP 4 059 685 B1

Fig. 11

1105    1104    <u>1100</u>

1105

1103

1105

1101(a)    1101(c)    1101(d)    1101(e)    1101(b)

1101

(a)

1105    1104    <u>1100</u>

1103

1101(a)    1101(c)    1101(d)    1101(e)    1101(b)

1101

(b)

EP 4 059 685 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012510385 A
- JP 2017521291 A
- JP 2015116806 A
- EP 2447401 A1